# EUROPÄISCHE PATENTSCHRIFT

(11) **EP 3 174 183 B1**
(45) Veröffentlichungstag und Bekanntmachung des Hinweises auf die Patenterteilung: **18.09.2019**
(21) Anmeldenummer: 16195302.1
(22) Anmeldetag: 24.10.2016
(51) Int. Cl.: H02K 21/24, H02K 1/14, H02K 1/18, H02K 9/22

(54) **ELEKTRISCHE MASCHINE**
ELECTRIC MACHINE
MACHINE ÉLECTRIQUE

(30) Priorität: 30.11.2015 DE 102015223766
(43) Veröffentlichungstag der Anmeldung: 31.05.2017
(73) Patentinhaber: Baumüller Nürnberg GmbH, 90482 Nürnberg (DE)
(72) Erfinder: DEÁK, Csaba Zsolt, 90482 Nürnberg (DE); BRAUNEISER, Hans-Jürgen, 90765 Fürth (DE); SCHIECK, Robert, 90475 Nürnberg (DE); GUTJAHR, Frank, 92268 Etzelwang (DE)
(74) Vertreter: FDST Patentanwälte

(56) Entgegenhaltungen:
- FR-A1- 2 851 088
- US-A1- 2011 316 381
- US-A1- 2012 126 653
- US-A1- 2013 140 920

## Beschreibung

Die Erfindung betrifft eine elektrische Maschine mit einem um eine Maschinenachse drehbar gelagerten Rotor, und mit einem Stator. Die elektrische Maschine ist insbesondere ein Axialflussmotor.

Kraftfahrzeuge werden in zunehmendem Maß mittels Elektromotoren angetrieben, die beispielsweise als Radnabenmotoren ausgestaltet sind. Um den Wirkungsgrad des Kraftfahrzeugs sowie dessen Dynamik zu erhöhen, ist es erforderlich, dass die Elektromotoren vergleichsweise kompakt ausgestaltet sind und ein vergleichsweise geringes Gewicht aufweisen. Besonders geeignet hierfür sind sogenannte Axialflussmotoren. Diese weisen üblicherweise eine Anzahl an elektrischen Wicklungen auf, die parallel zur Drehachse eines Rotors und um diese herum unter Ausbildung eines Abstandes angeordnet sind. Mittels der elektrischen Wicklungen wird jeweils ein Magnetfeld parallel zur Drehachse erzeugt, wobei der jeweilige Magnetpol zur Drehachse beabstandet ist, und in axiale Richtung weist. Dieser wirkt mit Permanentmagneten zusammen, die der Rotor umfasst, der meist in axialer Richtung vor dem die elektrischen Wicklungen umfassenden Stator angeordnet ist. Hierbei weist keine der elektrischen Spulen einen Wickelkopf auf, weswegen sämtliche Bestandteile der Wicklung zur Erzeugung des den Rotor antreibenden Magnetfelds herangezogen werden. Auch ist bei einem Axialflussmotor eine vergleichsweise feine Polteilung realisierbar, sodass der Rotor auch mit einer vergleichsweise geringen Drehzahl und einem vergleichsweise großen Drehmoment betrieben werden kann, was ein Einsatzprofil eines Radnabenmotors ist. Es ist hierfür kein Getriebe erforderlich, was einerseits Reibverluste und andererseits das Gewicht reduziert. Auch sind Herstellungskosten in diesem Fall verringert.

Im Vergleich zu Radialflussmotoren, die eine Anzahl an senkrecht zur Drehachse angeordnete elektrischen Wicklungen aufweisen, mittels derer ein in Radialrichtung gerichtetes Magnetfeld bereitgestellt wird, ist jedoch die Ausgestaltung des Stators vergleichsweise komplex. Hierfür wird üblicherweise der die Wicklungen tragende Teil des Stators mittels eines Sinterverfahrens erstellt, wofür meist Ferritpulver innerhalb einer geeigneten Form verpresst wird. Auf diese Weise ist eine Formung des gewünschten Magnetfelds vergleichsweise präzise und auch die Herstellung ist vergleichsweise kostengünstig. Die mit einem derartigen Stator versehene elektrische Maschine weist jedoch insbesondere im Niedrigfrequenzbereich verringerte magnetische Eigenschaften auf, weswegen der Wirkungsgrad verringert ist. Infolgedessen ist ein vergrößerter Stator zur Erreichung einer bestimmten Leistung erforderlich. Zudem ist die mechanische Integrität des Stators vergleichsweise gering.

Eine Alternative hierzu ist das Wickeln des Stators aus Bandstreifen aus Elektroblech, die schneckenförmig aufgerollt werden. Da die Aussparungen, die die späteren Statornuten bilden, bereits vor dem Wicklungsprozess vorhanden sein müssen, und da der Radius und folglich der tangentiale Abstand zwischen benachbarten, die späteren Nuten bildenden Aussparungen mit zunehmendem Radius zunimmt, ist es erforderlich, dass der Bandstreifen auf den Elektromotor angepasst gefertigt wird. Mit anderen Worten muss zwischen jeder Ausstanzung der Abstand stets erneut ermittelt werden. Da beim Aufrollen zum Stator stets ein Spiel vorhanden ist, fluchten die einzelnen Aussparungen nicht vollständig, weswegen zur Realisierung von vergleichsweise geringen Fertigungstoleranzen ein kostenintensives Nachbearbeiten des Stators erforderlich ist.

Aus US 2011/0316381 A1 ist ein Axialflussmotor bekannt, der eine Anzahl an Zähnen aufweist, die an einem Joch angebunden und mittels einer Metallplatte stabilisiert sind. Die Zähne sind jeweils mittels eines in Radialrichtung gestapelten Blechpakets erstellt.

Aus US 2012/0126653 A1 ist ein Axialflussmotor bekannt, der beispielsweise bei einem Kraftfahrzeug verwendet wird. Der Stator ist mittels Aufwickeln eines Silikonstahlbandes erstellt, wobei Statornuten bildende Aussparungen bereits vor Aufwickeln in das Band eingestanzt sind.

FR 2 851 088 A1 betrifft einen Axialflussmotor. Ein Stator weist eine Anzahl an sich in Axialrichtung erstreckenden Zähnen auf, die mittels Sintern erstellt sind, und die an einer Basis angebunden sind. Die Basis ist mittels eines Blechpakets erstellt.

US 2013/0140920 A1 betrifft einen Axialflussmotor. Hierbei wird ein Stator mittels Aufrollen eines Silikonstahlbandes erstellt. Ferner ist ein Statorsitz vorhanden, der beispielsweise spritzgegossen ist.

Der Erfindung liegt die Aufgabe zugrunde, eine besonders geeignete elektrische Maschine, insbesondere einen Axialflussmotor, sowie einen besonders geeigneten Stator einer derartigen elektrischen Maschine anzugeben, wobei insbesondere Herstellungskosten und/oder Fertigungstoleranzen reduziert sind, und wobei zweckmäßigerweise die magnetischen Eigenschaften und folglich ein Wirkungsgrad erhöht sind.

Hinsichtlich der elektrischen Maschine wird diese Aufgabe durch die Merkmale des Anspruchs 1 und hinsichtlich des Stators durch die Merkmale des Anspruchs 11 erfindungsgemäß gelöst. Vorteilhafte Weiterbildungen und Ausgestaltungen sind Gegenstand der jeweiligen Unteransprüche.

Die elektrische Maschine weist einen um eine Maschinenachse drehbar gelagerten Rotor und einen Stator auf. Die elektrische Maschine ist insbesondere eine Synchronmaschine und vorzugsweise als bürstenloser Gleichstrommotor ausgestaltet. Zweckmäßigerweise ist die elektrische Maschine eine Axialflussmaschine, wobei bei Betrieb mittels des Stators vorzugsweise ein parallel zur Maschinenachse verlaufendes Magnetfeld erstellt wird. Die elektrische Maschine ist beispielsweise ein Generator, besonders bevorzugt jedoch ein Elektromotor, und insbesondere ein Axialflussmotor. Die elektrische Maschine wird besonders bevorzugt innerhalb eines Kraftfahrzeugs eingesetzt und wird bevorzugt für den Antrieb des Kraftfahrzeugs verwendet.

Der Stator weist eine gesinterte Trägerstruktur auf, die aus einem pulverförmigen weichmagnetischen Material erstellt ist. Das Material ist besonders bevorzugt ein Komposit und weist beispielsweise ein Ferritpulver auf oder besteht hieraus. Mit anderen Worten ist die Trägerstruktur ferromagnetisch. Der Stator weist ferner einen Einsatz auf, der an der Trägerstruktur angebunden ist. Beispielsweise ist der Einsatz an der Trägerstruktur befestigt, zum Beispiel mittels eines Klebers. Besonders bevorzugt ist zwischen dem Einsatz und der Trägerstruktur zumindest teilweise ein Form- und/oder Kraftschluss erstellt, mittels dessen der Einsatz an der Trägerstruktur angebunden ist. Der Einsatz selbst bildet zumindest teilweise einen Polschuh der elektrischen Maschine. Mit anderen Worten wird mittels des Polschuhs das bei Betrieb erstellte Magnetfeld zumindest teilweise geformt, insbesondere gebündelt, wobei vorzugsweise ein Permanentmagnet des Rotors in Wechselwirkung mit dem Polschuh ist.

Der Einsatz selbst ist ein Blechpaket. Das Blechpaket ist mittels einzelner, übereinander gestapelter Lagen an Einzelblechen (Elektroblechen) gebildet, die beispielsweise aus einem Weicheisen erstellt sind. Die einzelnen Bleche sind elektrisch zu dem jeweils benachbarten Blech isoliert und insbesondere aneinander angebunden. Zusammenfassend weist der Stator eine Hybridstruktur auf, die aus der gesinterten Trägerstruktur und dem das Blechpaket aufweisenden Einsatz gebildet ist.

Aufgrund der gesinterten Trägerstruktur ist es ermöglicht, eine vergleichsweise komplexe Geometrie des zu erstellenden Magnetfelds zu realisieren, wofür eine geeignete Pressform zur Erstellung der Trägerstruktur verwendet wird. Aufgrund des das Blechpaket aufweisenden Einsatzes ist hierbei ein Wirkungsgrad im Vergleich zu einer Fertigung des Stators lediglich mittels eines Sinterverfahrens erhöht. Das Blechpaket kann eine vergleichsweise geometrisch einfache Form aufweisen, was Herstellungskosten verringert. Folglich besteht eine Zweiteilung der Gestaltung des Magnetfelds, wobei die komplexe Gestaltung des Magnetfelds mittels der Trägerstruktur und die Bereitstellung eines verbesserten Wirkungsgrads mittels des Einsatzes erfolgen. Hierbei werden zweckmäßigerweise vergleichsweise einfach zu formende Bereiche des Magnetfelds mittels des Blechpakets des Einsatzes geformt.

Das Blechpaket umfasst eine Anzahl an Blechstapeln, beispielsweise zwei, drei oder mehr. Beispielsweise weist das Blechpaket weniger als zehn, neun oder acht derartige Blechstapel auf. Vorzugsweise umfasst das Blechpaket fünf Blechstapel. Die einzelnen Blechstapel des Blechpakets selbst sind in radialer Richtung aufeinander gestapelt und insbesondre aneinander angebunden, wobei zweckmäßigerweise Schweißen, Kleben oder Stanzpaketieren herangezogen wird. Jeder Blechstapel ist aus einzelnen Blechen gebildet, die die gleiche Form aufweisen. Insbesondere umfasst jeder Blechstapel mindestens fünf, zehn oder fünfzehn Bleche. Beispielsweise weist jeder Blechstapel weniger als hundert, neunzig oder achtzig einzelne Bleche auf. Vorzugsweise ist die Anzahl der Bleche jedes Blechstapels gleich.

Die einzelnen Bleche jedes Blechstapels sind in radialer Richtung aufeinander gestapelt, wobei die Bleche jedes Blechstapels beispielsweise mittels Klebens, Schweißens oder Stanzpaketierens miteinander verbunden sind. Mit anderen Worten ist die Ebene, innerhalb derer das jeweilige Blech angeordnet ist, senkrecht zur radialen Richtung.

Die Bleche der unterschiedlichen Blechstapel unterscheiden sich. Mit anderen Worten weist das Blechpaket eine zur Anzahl der Blechstapel korrespondierende Anzahl an unterschiedlichen Blechtypen auf, wobei gleichartige Bleche zu einem der Blechstapel zusammengefasst sind. Infolgedessen ist das Blechpaket auf magnetische und/oder geometrische Anforderungen angepasst, wobei dennoch eine Verwendung von Gleichteilen ermöglicht ist, was Herstellungskosten reduziert.

Beispielsweise sind die Bleche U-förmig ausgestaltet, wobei sich die Ausgestaltung zumindest eines der Schenkel der U-Form der Bleche zwischen den einzelnen Blechstapeln unterscheiden. Insbesondere ist die zentrale Aussparung der einzelnen Bleche gleich groß, und die einzelnen Bleche des Blechpakets fluchten in diesem Bereich.

Die Fläche der Bleche ist mit zunehmendem Abstand zur Maschinenachse vergrößert. Mit anderen Worten weist jeder Blechstapel mit zunehmendem Abstand zur Maschinenachse eine vergrößerte tangentiale Ausdehnung auf. Hierbei sind die Bleche jedes Blechstapels auch weiterhin gleichartig gefertigt, weswegen die Fläche der Bleche der Blechstapel im Wesentlichen stufenartig mit zunehmendem Abstand zur Maschinenachse vergrößert ist. Mit anderen Worten ist der Querschnitt des Blechpakets senkrecht zur Maschinenachse im Wesentlichen dreieck- oder kreissektorartig ausgestaltet, weswegen ein vergleichsweise großer Querschnitt des Stators senkrecht zur Maschinenachse mittels des Blechpakets erstellt ist. Auf diese Weise ist der Wirkungsgrad der elektrischen Maschine erhöht.

Das Blechpaket ist achsensymmetrisch bezüglich einer radialen Geraden angeordnet, sodass das mittels des Blechpakets geformte Magnetfeld in tangentialer Richtung keine Vorzugsrichtung aufweist. Folglich weist der Querschnitt des Blechpakets senkrecht zur Maschinenachse eine stufenförmige Begrenzung in tangentialer Richtung auf. Mit anderen Worten ist die in radialer Richtung verlaufende Kante des Blechpakets stufenförmig ausgestaltet, weswegen der Querschnitt des Blechpakets senkrecht zur Maschinenachse im Wesentlichen tannenbaumförmig ausgestaltet ist.

Vorzugsweise weist der Einsatz eine radial verlaufende Statornut auf. Insbesondere umfasst das Blechpaket die radial verlaufende Statornut, wobei diese beispielsweise mittels einer zylindrischen Aussparung des Blechpakets erstellt ist. Zweckmäßigerweise sind die Bleche des Blechpakets im Wesentlichen U-förmig ausgestaltet, wobei mittels der zentralen Aussparung jedes Blechs die Statornut erstellt ist. Hierfür fluchten die Bleche des Blechpakets zweckmäßigerweise im Bereich der zentralen Aussparung. Mit anderen Worten ist der zwischen den einzelnen Schenkeln jedes Blechs gebildete Bereich gleich groß. Zweckmäßigerweise weist jeder Einsatz lediglich eine einzige Statornut auf, weswegen bei der Herstellung des Blechpakets einerseits ein vergleichsweise geringer Verschnitt anfällt. Andererseits ist zur Erstellung des jeweiligen Blechs keine vergleichsweise komplizierte Stanzgeometrie erforderlich.

Beispielsweise weist der Einsatz einen radial verlaufenden Schlitz auf, der in die Statornut mündet. Insbesondere weist das Blechpaket sowohl den Schlitz als auch die Statornut auf. Der Schlitz weist im Vergleich zur Statornut eine verringerte tangentiale Ausdehnung auf, sodass die Statornut mit Ausnahme des mittels des Schlitzes gebildeten Bereichs umfangsseitig umschlossen ist. Beispielsweise ist der Querschnitt der Statornut senkrecht zur tangentialen Richtung fünfeckig, wobei eine der Ecken mittels des Schlitzes gebildet ist. Zweckmäßigerweise verläuft die Statornut, insbesondere der Schlitz, sofern dieser vorhanden ist, über die vollständige radiale Ausdehnung des Blechpakets. Folglich wird mittels des Blechpakets das Magnetfeld geformt, wobei die Herstellungskosten des Blechpakets vergleichsweise gering sind. Insbesondere weist das Blechpaket die Anzahl an Blechstapeln auf. Somit sind zur Erstellung des Blechpakets zwar unterschiedliche Bleche erforderlich. Diese weisen jedoch eine vergleichsweise geringe Fläche auf, und eine Korrektur der einzelnen Bleche zueinander beim Aufeinanderstapeln kann erfolgen, weswegen Fertigungstoleranzen vergleichsweise gering gewählt werden können. Mit anderen Worten kann jedes Blech im Wesentlichen unabhängig zu den anderen Blechen ausgerichtet werden.

Beispielsweise weist der Einsatz eine radial verlaufende Aussparung auf, insbesondere eine Anzahl derartiger Aussparungen, beispielsweise zwei, drei oder vier. Die radial verlaufende Aussparung erstreckt sich zweckmäßigerweise in radialer Richtung entlang der vollständigen Länge des Einsatzes. Geeigneterweise weist das Blechpaket die radial verlaufende Aussparung auf. Sofern das Blechpaket die einzelnen Blechstapel umfasst, weist jeder der Blechstapel zweckmäßigerweise einen Abschnitt der radial verlaufenden Aussparung auf. Diese fluchten beispielsweise miteinander oder sind zueinander in tangentialer Richtung versetzt. Beispielsweise ist die Aussparung nutförmig ausgestaltet, also einseitig offen, wobei die Öffnung zweckmäßigerweise am axialen Ende ist. Auf diese Weise ist das Einbringen der Aussparung in den Einsatz vereinfacht. Zweckmäßigerweise weist der Einsatz sowohl die radial verlaufende Statornut als auch die radial verlaufende Aussparung auf. Der Querschnitt der radialen Aussparung senkrecht zur radialen Richtung ist hierbei vorzugsweise kleiner als der Querschnitt der Statornut. Beispielsweise ist der Querschnitt der radialen Aussparung kleiner als die Hälfte, ein Zehntel, ein Fünftel, 5% oder 1% des Querschnitts der Statornut. Mittels der radialen Aussparung wird eine Homogenität des Magnetfelds zumindest teilweise aufgehoben, weswegen ein Rastmoment des Rotors reduziert ist, insbesondere sofern die elektrische Maschine eine permanent erregte Synchronmaschine ist. Folglich ist es ermöglicht, den Stator im Wesentlichen symmetrisch zu fertigen, wobei dennoch Rastmomente zuverlässig vermieden sind. Somit ist eine Erstellung einer elektrischen Wicklung des Stators auch mittels einer Wickelmaschine ermöglicht.

Alternativ oder in Kombination hierzu ist der Einsatz mit der Trägerstruktur verzahnt. Hierbei weist der Einsatz und die Trägerstruktur eine zueinander korrespondierende Stufen- oder Zahnstruktur auf. Zweckmäßigerweise weist der Einsatz das aus einer Anzahl an Blechstapeln aufweisende Blechpaket auf. Hierbei sind die Blechpakete zueinander derart angeordnet, dass eine Kante des Blechpakets stufenförmig ausgestaltet ist. Vorzugsweise ist das Blechpaket tannenbaumförmig ausgestaltet, wobei beide Seiten des Blechpakets mit einem korrespondierenden Bauteil der Trägerstruktur anliegen. Auf diese Weise ist zwischen der Trägerstruktur und dem Einsatz ein Formschluss erstellt, was eine Montage erleichtert.

Beispielsweise ragt der Einsatz in axialer Richtung durch die Trägerstruktur. Mit anderen Worten wird ein Abschnitt des Einsatzes umfangsseitig zumindest teilweise mittels der Trägerstruktur umgeben. Der Einsatz weist zwei weitere Abschnitte auf, die in axialer Richtung auf unterschiedlichen Seiten der Trägerstruktur positioniert sind. Somit ist aufgrund der erhöhten Permeabilität des Einsatzes im Vergleich zur Trägerstruktur ein vergleichsweise ausgeprägtes Magnetfeld bereitgestellt, wobei ein Ablösen oder Verkippen des Einsatzes bezüglich der Trägerstruktur im Wesentlichen vermieden ist.

Zweckmäßigerweise liegt der Einsatz stirnseitig an einer Kühlplatte an. Mit anderen Worten ist die Kühlplatte in axialer Richtung an einem Ende des Einsatzes angeordnet. Vorzugsweise ist der Einsatz an der Kühlplatte angebunden, was eine mechanische Robustheit erhöht. Zweckmäßigerweise ist der Einsatz thermisch mit der Kühlplatte kontaktiert. Vorzugsweise ist zwischen dem Einsatz und der Kühlplatte ein direkter mechanischer Kontakt erstellt. Die Kühlplatte weist geeigneterweise ein Anzahl von Rippen oder eine Kühlmittelleitung auf. Mittels der Kühlplatte ist ein Abführen der Verlustwärme von dem Einsatz ermöglicht, was den Wirkungsgrad der elektrischen Maschine erhöht. Der sich auf der verbleibenden Seite der Trägerstruktur befindende Abschnitt des Einsatzes wird von der Kühlplatte im Wesentlichen nicht beeinflusst, sodass mittels dieses Abschnitts ein vergleichsweise ausgeprägtes Magnetfeld erstellt ist. Insbesondere befindet sich der Rotor auf der der Kühlplatte gegenüberliegenden Seite der Trägerstruktur in axialer Richtung.

Beispielsweise ist der Abschnitt des Einsatzes, der durch die Trägerstruktur ragt, in tangentialer Richtung verjüngt. Mit anderen Worten weist dieser Abschnitt eine verringerte Ausdehnung in tangentialer Richtung auf. Zweckmäßigerweise liegt an diesem Abschnitt stirnseitig die Kühlplatte an. Folglich ist eine verringerte Materialmenge zur Erstellung des Einsatzes erforderlich. Insbesondere, sofern der Rotor auf der verbleibenden Seite der Trägerstruktur angeordnet ist, dient der verjüngte Abschnitt im Wesentlichen der Abführung von Wärme, wobei aufgrund des verbleibenden Abschnittes des Einsatzes das Magnetfeld im Wesentlichen nicht beeinflusst ist. Zweckmäßigerweise liegt das Blechpaket an der Kühlplatte an und/oder ist in tangentialer Richtung verjüngt.

Beispielsweise ist die Trägerstruktur einstückig ausgestaltet. Bevorzugt jedoch weist die Trägerstruktur eine Anzahl separater Segmente auf, die insbesondere gleichartig sind und/oder vorzugsweise sektorartig ausgestaltet sind. Zweckmäßigerweise besteht die Trägerstruktur aus den Segmenten. Die Segmente sind insbesondere einstückig. Die Segmente sind beispielsweise drehsymmetrisch zueinander angeordnet. Mit anderen Worten weist jedes Segment im Wesentlichen einen kreissektorartigen Querschnitt auf oder ist zumindest innerhalb eines derartigen Sektors angeordnet. Die einzelnen Segmente sind in tangentialer Richtung angeordnet und vorzugsweise aneinander angebunden und/oder angelegt. Zweckmäßigerweise sind die Segmente aneinander befestigt, beispielsweise mittels eines Form- und/oder Kraftschlusses, wofür diese vorzugsweise geeignet geformte Überlappungen aufweisen. Alternativ oder in Kombination hierzu werden Befestigungsmittel, wie Schrauben, Bolzen oder Klebstoff verwendet. Aufgrund der Fertigung der Trägerstruktur aus einzelnen separaten Segmenten ist es ermöglicht, einen vergleichsweise großen Stator zu erstellen, wobei die zur Herstellung der gesinterten Segmente verwendete Pressform vergleichsweise klein ist. Auch ist zur Erstellung der einzelnen Segmente eine verringerte Kraft erforderlich, was Herstellungskosten weiter reduziert.

Alternativ oder in Kombination ist stirnseitig an der Trägerstruktur ein Flansch angebunden. Beispielsweise ist die Trägerstruktur stirnseitig zumindest teilweise mittels des Flansches abgedeckt, der beispielsweise scheiben- oder ringförmig ausgestaltet ist. Insbesondere ist der Flansch aus einem Aluminium, also aus reinem Aluminium, oder einer Aluminiumlegierung gefertigt. Mittels des Flansches wird die Trägerstruktur stabilisiert, sodass die mechanische Integrität der elektrischen Maschine erhöht ist. Zweckmäßigerweise ist hierbei die Kühlplatte vorhanden, wobei der Flansch vorzugsweise zwischen der Kühlplatte und der Trägerstruktur angeordnet ist. Sofern der Einsatz durch die Trägerstruktur ragt, weist der Flansch bevorzugt eine hierzu korrespondierende Öffnung auf, wobei der Flansch geeigneterweise im Wesentlichen formschlüssig an dem durch die Trägerstruktur ragenden Abschnitt anliegt. Zweckmäßigerweise ist hierbei der Abschnitt des Einsatzes in tangentialer Richtung verjüngt, weswegen der Flansch im Vergleich zur Trägerstruktur robuster ausgestaltet sein kann, was die mechanische Stabilität der elektrischen Maschine weiter erhöht. Der Flansch ist vorzugsweise ein Bestandteil eines Gehäuses, innerhalb dessen der Stator angeordnet ist. Beispielsweise ist der Flansch mittels eines Lagerschilds des Gehäuses gebildet. Vorzugsweise ist der Flansch einstückig mit weiteren Bestandteilen des Gehäuses, was eine Herstellung vereinfacht.

Beispielsweise weist die Trägerstruktur einen Innenring und einen Außenring auf. Der Innenring und der Außenring sind vorzugsweise konzentrisch zueinander und zur Maschinenachse angeordnet, und überdecken sich zweckmäßigerweise in axialer Richtung zumindest abschnittsweise, vorzugsweise im Wesentlichen vollständig. Auf diese Weise ist eine Baugröße der elektrischen Maschine reduziert. Der Innenring und der Außenring sind mittels zumindest eines Stegs, vorzugsweise einer Anzahl an Stegen, verbunden. Der bzw. die Stege verlaufen zweckmäßigerweise in radialer Richtung, sodass mittels dieser im Wesentlichen lediglich Kräfte in radialer Richtung aufgenommen werden müssen. Sofern die Trägerstruktur aus einer Anzahl an Segmenten erstellt ist, weist jedes Segment zumindest einen der Stege, insbesondere genau einen der Stege auf, der ein Segment des Innenrings mit einem Segment des Außenrings verbindet. Vorzugsweise ist der Steg auf einer Symmetrieachse des Segments angeordnet. Mit anderen Worten ist jedes Segment im Wesentlichen achsensymmetrisch ausgestaltet. Auf diese Weise ist eine Montage erleichtert.

Vorzugsweise ist der Einsatz in tangentialer Richtung zwischen zweien der Stege positioniert, und liegt zweckmäßigerweise an den beiden Stegen zumindest abschnittsweise an. Geeigneterweise ist zwischen dem Steg und dem Einsatz, insbesondere dem Blechpaket, ein Form- und/oder Kraftschluss erstellt. Zum Beispiel ist der Einsatz bzw. das Blechpaket mit dem Steg verzahnt. Geeigneterweise ist der Einsatz in radialer Richtung zumindest teilweise zwischen dem Innenring und dem Außenring angeordnet. Auf diese Weise ist der Einsatz vergleichsweise stabil positioniert. Hierbei wird mittels des Einsatzes ein vergleichsweise ausgeprägter Anteil des mittels des Stators erstellten Magnetfelds getragen, was den Wirkungsgrad erhöht. Zweckmäßigerweise ragt hierbei der Einsatz durch die Trägerstruktur. Sofern der Einsatz die radiale Aussparung oder den in die Statornut mündenden Schlitz aufweist, befinden sich diese vorzugsweise auf der dem Innen- und Außenring abgewandten Seite des Einsatzes, sodass die mittels der radialen Aussparung bzw. des Schlitzes erstellten Änderungen des Magnetfelds mittels der beiden Ringe im Wesentlichen nicht beeinflusst wird.

Vorzugsweise liegt der Einsatz zumindest abschnittsweise an dem Innenring und an dem Außenring an. Mit anderen Worten ist zwischen dem Einsatz und den beiden Ringen ein direkter mechanischer Kontakt erstellt, insbesondere zwischen den beiden Ringen und dem Blechpaket. Auf diese Weise ist eine Formung des Magnetfelds vereinfacht und kein Luftspalt oder dergleichen vorhanden, mittels dessen die Feldlinien des Magnetfelds ungeeignet geformt würden. Auch ist die Position des Einsatzes bezüglich der Trägerstruktur aufgrund des direkten mechanischen Kontakts stabilisiert, sodass die elektrische Maschine vergleichsweise robust ist.

Vorzugsweise weist der Außenring eine mantelsegmentförmige Abdeckung auf, die den Einsatz in radialer Richtung überdeckt, insbesondere über dessen vollständige axiale Länge, zumindest in eine Richtung bezüglich des Außenrings. Insbesondere überdeckt die Abdeckung das Blechpaket. Vorzugsweise verläuft die mantelsegmentförmige Abdeckung in axialer Richtung. Mittels der Abdeckung wird der Einsatz stabilisiert, sodass eine Robustheit erhöht ist. Der Querschnitt der mantelsegmentförmigen Abdeckung ist insbesondere halbmond- oder kreissegmentförmig. Vorzugsweise liegt der Einsatz, insbesondere das Blechpaket, an der Abdeckung auf, die radial außenseitig gebogen ausgestaltet ist. Zweckmäßigerweise weist die Abdeckung eine Anzahl an Aussparungen/Öffnungen auf, die insbesondere mit korrespondierenden Elementen des Einsatzes, wie der Statornut oder der radial verlaufenden Aussparung, fluchten, sofern diese vorhanden sind. Geeigneterweise umfasst der Stator eine elektrische Wicklung, vorzugsweise eine Anzahl an elektrischen Wicklungen. Insbesondere ist die Anzahl der elektrischen Wicklungen gleich der Anzahl an Einsätzen.

Die elektrische Wicklung ist vorzugsweise abschnittsweise teilweise um die mantelsegmentförmige Abdeckung geschlungen. Mit anderen Worten liegt die elektrische Wicklung an der Abdeckung an. Aufgrund der Abrundung der Abdeckung ist eine Beschädigung der elektrischen Wicklung bei Erstellung des Stators und bei Betrieb der elektrischen Maschine im Wesentlichen ausgeschlossen. Die elektrische Wicklung selbst ist beispielsweise aus einem Kupferlackdraht erstellt. Vorzugsweise liegt die elektrische Wicklung teilweise in der Statornut ein, sofern diese vorhanden ist. Geeigneterweise sind innerhalb der Statornut zwei elektrische Wicklungen zumindest teilweise angeordnet.

Zweckmäßigerweise weist der Stator eine Anzahl gleichartiger Einsätze auf, die insbesondere als Gleichteile erstellt sind. Mit anderen Worten unterscheiden sich die Blechpakete der einzelnen Einsätze nicht. Vorzugsweise umfasst die elektrische Maschine die gleiche Anzahl an Polschuhen wie Einsätze. Hierbei wird mittels jedes Einsatzes beispielsweise jeweils einer der Polschuhe gebildet, oder besonders bevorzugt bilden die einander zugewandten Hälften jeweils zweier benachbarter Einsätze zumindest teilweise einen der Polschuhe. Mit anderen Worten sind die Polschuhe in tangentialer Richtung insbesondere mittels der Statornuten begrenzt, sofern diese vorhanden sind. Beispielsweise ist jedem der Polschuhe eine der elektrischen Wicklungen zugeordnet, wobei innerhalb der den jeweiligen Polschuh begrenzenden Statornuten die zugeordnete elektrische Wicklung zumindest teilweise einliegt.

Vorzugsweise ist die Trägerstruktur mittels separater Segmente gefertigt. Auf diese Weise weist der Stator eine Anzahl an Bauelementen auf, die eine vergleichsweise geringe räumliche Ausdehnung aufweisen. Somit sind einerseits eine Lagerhaltung und andererseits eine Montage vereinfacht. Beispielsweise weist die elektrische Maschine zwei Rotoren auf, die in axialer Richtung den Stator umgeben. Alternativ hierzu ist der Rotor zumindest teilweise umfangsseitig bezüglich des Stators angeordnet. Besonders bevorzugt jedoch weist die elektrische Maschine lediglich einen einzigen Rotor auf, der vorzugsweise stirnseitig des Stators positioniert ist. Hierbei ist der Rotor zweckmäßigerweise auf der der Kühlplatte gegenüberliegenden Seite der Trägerstruktur angeordnet, sofern die Kühlplatte vorhanden ist.

Der Stator ist Bestandteil einer elektrischen Maschine, insbesondere einer Axialflussmaschine. Der Stator weist eine gesinterte Trägerstruktur auf, die beispielsweise aus einem ferromagnetischen Material, insbesondere Eisenpulver, erstellt ist. An der Trägerstruktur ist ein Einsatz angebunden, der zumindest teilweise einen Polschuh bildet und der ein Blechpaket umfasst, das bevorzugt aus einer Anzahl an Blechstapeln erstellt ist.

Nachfolgend wird die Erfindung anhand einer Zeichnung näher erläutert. Darin zeigen:
- Fig. 1: schematisch in einer Schnittdarstellung einen Axialflussmotor mit einem Stator,
- Fig. 2: perspektivisch eine Trägerstruktur des Stators,
- Fig. 3: in einer Draufsicht die Trägerstruktur,
- Fig. 4: perspektivisch ein separates Segment der Trägerstruktur,
- Fig. 5: perspektivisch einen Einsatz mit einem Blechpaket,
- Fig. 6: perspektivisch den an dem Segment befestigten Einsatz,
- Fig. 7: perspektivisch die Trägerstruktur mit einer Anzahl an daran angebundenen Einsätzen,
- Fig. 8A,8B: jeweils perspektivisch eine weitere Ausgestaltungsform des Einsatzes sowie der hieran angepassten Trägerstruktur,
- Fig. 9A bis 11B: jeweils gemäß Fig. 8A,8B weitere Ausgestaltungsformen der Trägerstruktur und des Einsatzes,
- Fig. 12: in einer Draufsicht eine weitere Ausgestaltungsform des Einsatzes,
- Fig. 13: perspektivisch in einer Aufrissdarstellung den montierten Einsatz gemäß Fig. 12, und
- Fig. 14 und 15: in einer Schnittdarstellung perspektivisch den Axialflussmotor.

Einander entsprechende Teile sind in allen Figuren mit den gleichen Bezugszeichen versehen.

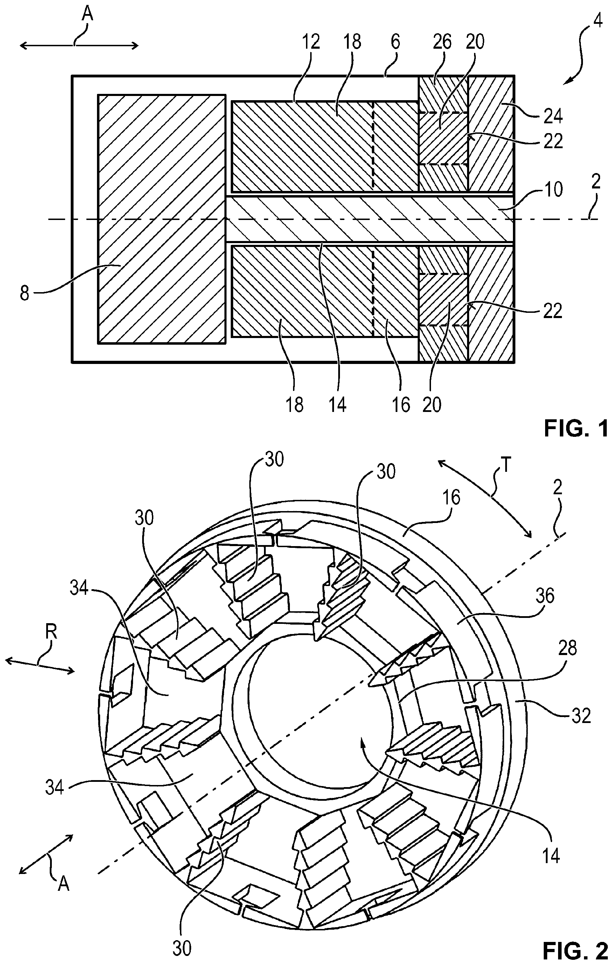

In Fig. 1 ist in einer Schnittdarstellung längs einer Maschinenachse 2 eine elektrische Maschine 4 dargestellt, die ein Axialflussmotor ist, und die im Montagezustand dem Vortrieb beispielsweise eines Kraftfahrzeugs dient. Die elektrische Maschine 4 weist ein Gehäuse 6 auf, innerhalb dessen ein um die Maschinenachse 2 drehbar gelagerter Rotor 8 positioniert ist, der an einer Welle 10 angebunden ist. Der Rotor 8 ist im Wesentlichen zylindrisch ausgestaltet und konzentrisch zur Maschinenachse 2 sowie zur Welle 10 angeordnet. Die Lagerung der Welle 10 sowie des Rotors 8 erfolgt mittels nicht näher dargestellter Lager, beispielsweise Kugellager. Die Welle 10 ist aus dem Gehäuse 6 herausgeführt, wofür dieses einen nicht näher dargestellten Zapfen aufweist. An diesem sind anzutreibende Bestandteile des Kraftfahrzeugs, wie ein Rad, angebunden oder zumindest wirkverbunden.

Die elektrische Maschine 4 weist ferner einen Stator 12 mit einer zentralen Öffnung 14 auf, innerhalb derer die Welle 10 angeordnet ist, und die parallel zur Maschinenachse 2 verläuft. Mit anderen Worten ist der Stator 12 im Wesentlichen zylindrisch bzw. hohlzylindrisch ausgestaltet und konzentrisch zur Maschinenachse 2 angeordnet, wobei sich der Rotor 8 auf einer Stirnseite des Stators 12 befindet. Auf diese Weise ist die elektrische Maschine 4 vergleichsweise kompakt, wobei ein Verkippen des Rotors 8 im Wesentlichen ausgeschlossen ist. Die elektrische Maschine 4 weist in der hier dargestellten Variante lediglich einen einzigen Rotor 8 auf. Mittels des Stators 12 wird bei Betrieb ein Magnetfeld erstellt, das zumindest im Bereich der Welle 10 parallel zur Maschinenachse 2 ausgestaltet ist, und mit nicht näher dargestellten Permanentmagneten des Rotors 8 wechselwirkt. Hierfür wird der Stator 12 mittels eines nicht näher dargestellten Umrichters bestromt.

Der Stator 12 weist eine Trägerstruktur 16 sowie eine Anzahl an Einsätzen 18 auf, die an der Trägerstruktur 16 angebunden sind und durch diese in axialer Richtung 16 hindurch ragen. Der jeweilige Abschnitt 20 jedes der Einsätze 18, der durch die Trägerstruktur 16 hindurch ragt und sich folglich auf der dem Rotor 8 gegenüberliegenden Seite befindet, liegt mit der jeweiligen Stirnseite 22 an einer Kühlplatte 24 an und ist in thermischem Kontakt mit dieser. Zwischen der Trägerstruktur 16 und der ringförmigen, senkrecht zur Maschinenachse 2 angeordneten Kühlplatte 24 befindet sich ein an der Trägerstruktur 16 und der Kühlplatte 24 befestigter einstückiger Flansch 26, der mit Ausnahme der Aussparungen für die Abschnitte 20 ebenfalls ringförmig ausgestaltet ist. Der Flansch 26 ist aus einem Aluminium erstellt und ein Bestandteil des einstückigen Gehäuses 6.

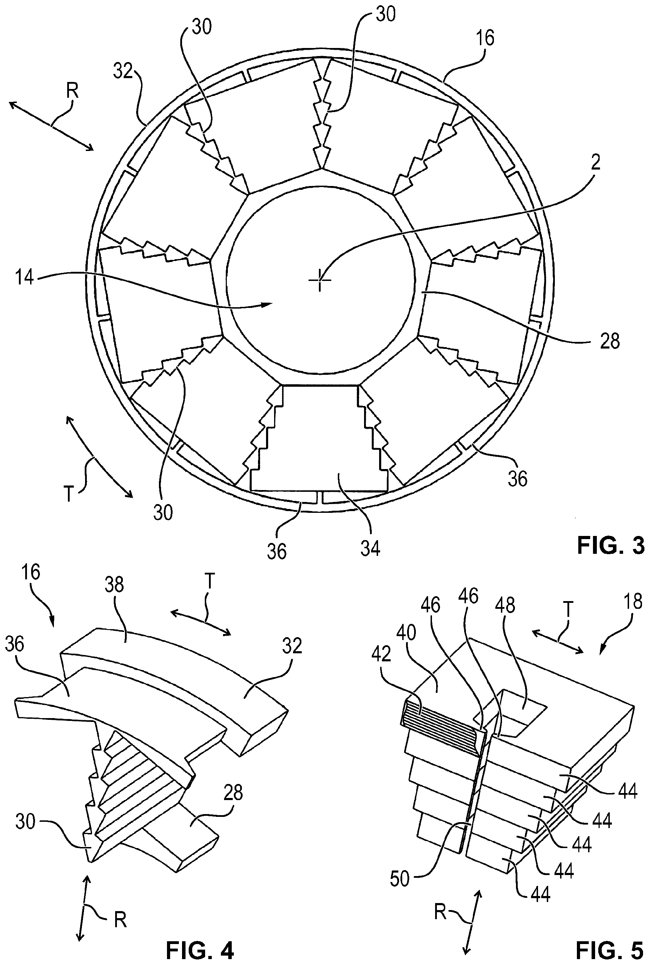

In Fig. 2 ist perspektivisch und in Fig. 3 in einer Draufsicht die Trägerstruktur 16 dargestellt, die aus einem gesinterten, pulverförmigen weichmagnetischen Materialkomposit erstellt ist, welches beispielsweise Eisenpulver enthält. Die Trägerstruktur 16 ist konzentrisch zur Maschinenachse 2, die parallel zu einer axialen Richtung A ist, angeordnet und umgibt diese somit in radialer Richtung R. Unter radialer Richtung R wird insbesondere eine Richtung verstanden, die senkrecht zur axialen Richtung A ist und die auf die Maschinenachse 2 bzw. von dieser weg gerichtet ist. Die Trägerstruktur 16 weist einen Innenring 28 auf, der die zentrale Öffnung 14 umgibt. Der Innenring 28 selbst weist an dessen radialer Innenseite eine kreisrund geformte Oberfläche auf, wohingegen der Außenumfang des Querschnitts des Innenrings 28 senkrecht zur Maschinenachse 2 mittels eines regelmäßigen Neunecks gebildet ist. An jeder Ecke ist ein Steg 30 freiendseitig positioniert, der in radialer Richtung R verläuft. Jeder dieser Stege 30 weist als dessen jeweilige tangentiale Begrenzung, also in einer tangentialen Richtung T, eine Treppen- bzw. Stufenform auf. Das radial außen liegende Ende jedes Stegs 30 ist an einem Außenring 32 angebunden, der den Innenring 28 in radialer Richtung R umgibt. Folglich sind mittels der Stege 30 sowie des Innen- und Außenrings 28, 32 Montageöffnungen 34 gebildet, die drehsymmetrisch bezüglich der Maschinenachse 2 angeordnet sind, und die jeweils einen im Wesentlichen trapezförmigen Querschnitt aufweisen.

Jede der Montageöffnungen 34 ist ferner mittels einer mantelsegmentförmigen Abdeckung 36 des Außenrings 32 in radialer Richtung R begrenzt, die im Vergleich zum Innenring 14 eine vergrößerte axiale Ausdehnung, also eine vergrößerte Ausdehnung in eine Richtung parallel zur Maschinenachse 2 aufweist. Auch die Stege 30 weisen eine hierzu korrespondierende Ausdehnung auf. Der Querschnitt jeder mantelsegmentförmigen Abdeckung 36 senkrecht zur Maschinenachse 2 ist halbmond- bzw. kreissegmentförmig.

Die Trägerstruktur 16 ist mittels gleichartiger, separater Segmente 38 gebildet, von denen eines in Fig. 4 perspektivisch gezeigt ist. Jedes Segment 38 weist sowohl einen Abschnitt des Außenrings 32 mit jeweils einer der Abdeckungen 36 sowie einen Abschnitt des Innenrings 28 und einen einzigen der Stege 30 auf. Sämtliche Segmente 38 sind einstückig in einem Sinterverfahren erstellt und in tangentialer Richtung T zur Erstellung der ein Fig. 2 und 3 dargestellten Trägerstruktur 16 angeordnet und aneinander befestigt. Aufgrund der Verwendung der einzelnen Segmente 38 ist auch die Erstellung einer elektrischen Maschine 4 mit einer vergleichsweise großen räumlichen Ausdehnung ermöglicht, wobei für die zur Erstellung erforderliche Pressform lediglich die räumliche Ausdehnung des in Fig. 4 dargestellten Segments 38 benötigt.

In Fig. 5 ist einer der Einsätze 18 der elektrischen Maschine 4 perspektivisch dargestellt, wobei die Anzahl der Einsätze 18 der elektrischen Maschine 4 gleich der Anzahl der Montageöffnungen 34 ist. Jeder Einsatz 18 weist ein Blechpaket 40 mit einer Anzahl an einzelnen Blechen 42 auf, die aus einem Weicheisenblech gestanzt und in radialer Richtung R gestapelt sind. Die Bleche 42 weisen in radialer Richtung R eine Beschichtung auf, mittels derer die benachbarten Bleche 42 elektrisch gegeneinander isoliert sind. Das Blechpaket 40 weist fünf Blechstapel 44 auf, wobei sämtliche Bleche 42 jedes der Blechstapel 44 die gleiche Form aufweisen, und wobei sich die Bleche 42 unterschiedlicher Blechstapel unterscheiden. Jeder der Blechstapel 44 weist die gleiche Anzahl an Blechen 42 auf, wobei die einzelnen Bleche 42 jedes Blechstapels 44 und die Blechstapel 44 jeweils aneinander angebunden sind, beispielsweise mittels Löten, Schweißen, Kleben oder Stanzpaketieren. Sämtliche Bleche 42 sind hierbei im Wesentlichen U-förmig ausgestaltet, wobei die beiden parallelen Schenkel der U-Form eine auf den jeweils anderen Schenkel zugewandten Hintergriff 46 aufweisen. Infolgedessen weist jedes Blech 42 eine im Wesentlichen fünfeckige Aussparung auf. Die Aussparungen sämtlicher Bleche 42 sind gleich groß und fluchten miteinander. Folglich weist das Blechpaket 40 eine radial verlaufende Statornut 48 auf, in die ein radial verlaufender Schlitz 50 mündet, der sich zwischen den beiden Hintergriffen 46 befindet, und der in tangentialer Richtung T im Vergleich zur Statornut 48 eine verringerte Ausdehnung aufweist.

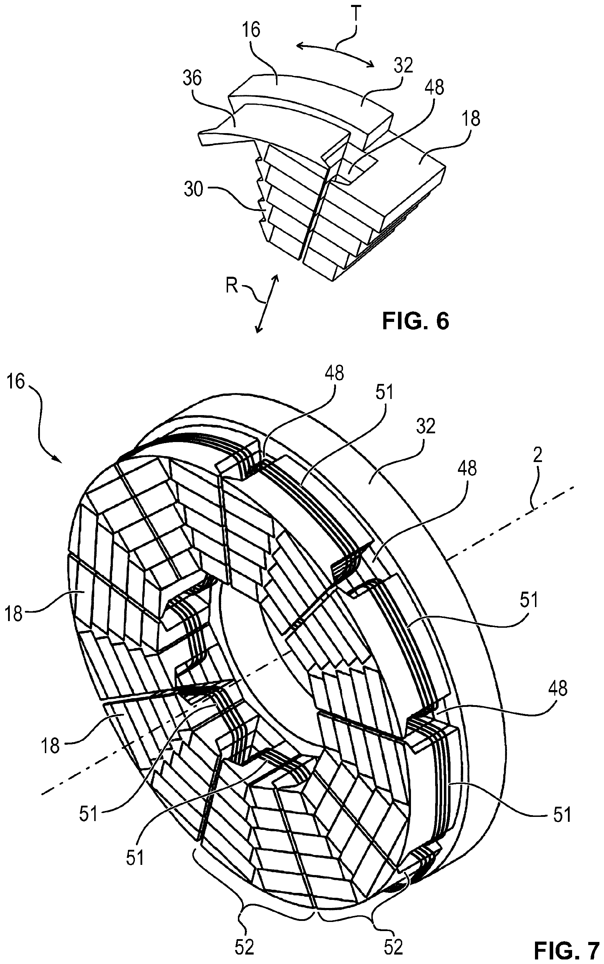

Die Ausdehnung der zueinander parallelen Schenkel der U-Form der Bleche 42 in tangentialer Richtung T nimmt mit zunehmendem Abstand der Blechstapel 44 zur Maschinenachse 2 zu, wobei dies symmetrisch bezüglich der mittels des Schlitzes 50 definierten Geraden erfolgt. Infolgedessen ist das Blechpaket 40 achsensymmetrisch bezüglich einer in radialer Richtung R verlaufenden Geraden angeordnet, und mit zunehmendem Abstand zur Maschinenachse 2 ist die Fläche der Bleche 42 vergrößert, wobei sämtliche Bleche 42 jeweils des gleichen Blechstapels 44 die gleiche Form und folglich die gleiche Fläche aufweisen. Somit weist das Blechpaket 40 in tangentialer Richtung T als Begrenzung eine Stufenform auf, die im Montagezustand, wie in Fig. 6 gezeigt, in die korrespondierende Stufenform des radial verlaufenden Stegs 30 eingreift, sofern der Einsatz 18 in eine der Montageöffnungen 34 eingesetzt wird. Infolgedessen ist die Trägerstruktur 16 mit dem Einsatz 18, der im Wesentlichen mittels des Blechpakets 40 gebildet ist, verzahnt und zwischen der Trägerstruktur 16 unter dem Einsatz 18 ist ein Formschluss erstellt. Hierbei liegt der Einsatz 18 sowohl abschnittsweise an dem Innenring 28 als auch an dem Außenring 32 an, wobei die mantelsegmentförmige Abdeckung 36 den Einsatz 18 in radialer Richtung R überdeckt. Mit anderen Worten ist der Einsatz 18 in radialer Richtung R von der Abdeckung 36 und weiteren Bestandteilen des Außenrings 32 umgeben. Die Abdeckung 36 ist hierbei in tangentialer Richtung T ausgespart, sodass diese mit der Statornut 48 fluchtet.

In Fig. 7 ist die Trägerstruktur mit neun daran angebundenen Einsätzen 18 gemäß Fig. 2 dargestellt, wobei in jeder Montageöffnung 34 aus den einzelnen Segmenten 38 erstellte Trägerstruktur 16 einer der Einsätze 18 formschlüssig positioniert ist. Jeder der neun gleichartigen Einsätze 18 liegt sowohl abschnittsweise an dem Innenring 28 als auch an dem Außenring 32 an. Folglich ist jeder der Einsätze 18 in radialer Richtung R zumindest teilweise zwischen den Innenring 28 und dem Außenring 32 angeordnet. Die in Fig. 6 und 7 gezeigten Einsätze 18 weisen den durch die Trägerstruktur 16 ragenden Abschnitt 20 nicht auf.

Jede der Abdeckungen 36 ist mittels jeweils einer zugeordneten elektrischen Wicklung 51 umwickelt, die aus einem Kupferlackdraht erstellt sind. Jede der elektrischen Wicklungen 51 ist durch zwei in tangentialer Richtung T benachbarte Statornuten 48 geführt, so dass die Achse jeder der elektrischen Wicklungen 51 parallel zur Drehachse 2 und beabstandet zu dieser ist. Hierbei ist jeweils mit den aufeinander zu gerichteter Hälften benachbarter Einsätze 18 sowie des dazwischen angeordneten radialen Steges 30 ein Polschuh 52 der elektrischen Maschine gebildet, die folglich neun Polschuhe 52 aufweist. Jedem der Polschuhe 52 ist somit eine der elektrischen Wicklungen 51 zugeordnet. Insbesondere ist jeder der Polschuhe 52 mit der zugeordneten elektrischen Wicklungen 51 bewickelt. Die Abdeckungen 36 dienen als magnetischer Rückschluss sowie zur Positionierung der elektrischen Wicklung 51, wobei aufgrund der radial außen liegenden Mantelfläche der Abdeckungen 36, bei der im Wesentlichen scharfe Kanten vermieden sind, eine Beschädigung der elektrischen Wicklung 51 bei der Montage ausgeschlossen ist.

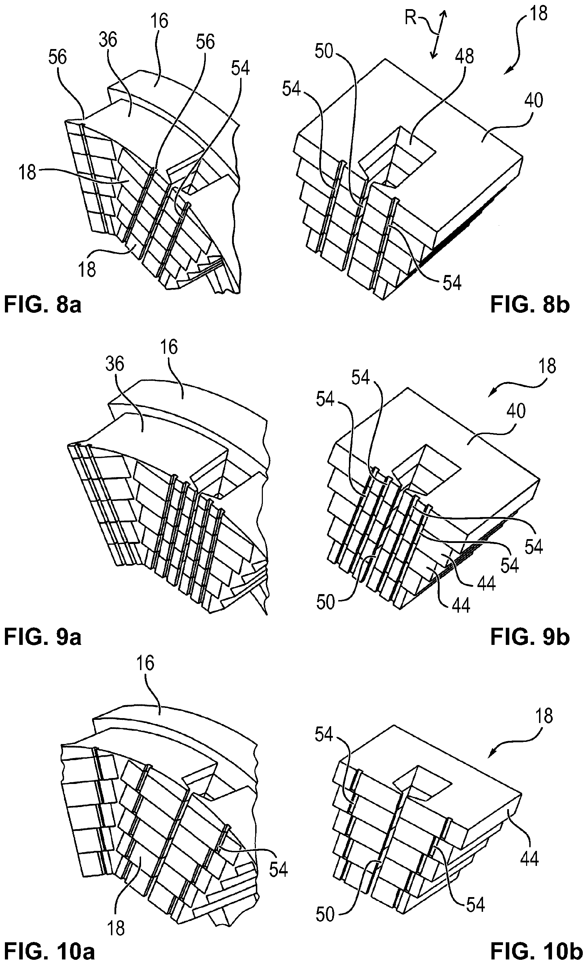

In Fig. 8 ist gemäß Fig. 6 eine Abwandlung der Trägerstruktur 16 sowie des Einsatzes 18 dargestellt, der in Fig. 8 gemäß Fig. 5 gezeigt ist. Der Einsatz 18 weist zwei parallel zu dem Schlitz 50 verlaufende nutförmige Aussparungen 54 auf, wobei die Abdeckung 36 eine hierzu korrespondierende Kerbe 56 aufweist, sodass jede der Aussparungen 52 mit jeweils einer der Kerben 56 der Abdeckung 36 fluchtet. Die beiden Aussparungen 54 sind achsensymmetrisch bezüglich einer mittels des Schlitzes 50 definierten Geraden angeordnet. Aufgrund der Aussparungen 54 wird ein Rastmoment zwischen dem Rotor 8 und dem Stator 12 reduziert, sodass bei Betrieb der Rotor einen verbesserten Rundlauf aufweist. In den Fig. 9A und 9B ist eine weitere Ausgestaltung des Einsatzes 18 sowie der Trägerstruktur 16 dargestellt, wobei der Einsatz 18 vier radial verlaufende Aussparungen 54 aufweist. Jede der Abdeckungen 36 weist im Montagezustand mit den Aussparungen fluchtende Kerben 56 auf, weswegen jede der Aussparungen 36 vier derartige Kerben 56 umfasst. Auch hier sind die Aussparungen 54 achsensymmetrisch bezüglich des radial verlaufenden Schlitzes 50 angeordnet, wobei der Querschnitt jeder der Aussparungen 54 in radialer Richtung R im Wesentlichen der in der vorhergehenden Ausführung gezeigten Variante entspricht.

In den Fig. 10 A und 10 B ist eine Abwandlung der in Fig. 8A, 8B gezeigten Ausgestaltung des Einsatzes 18 sowie der Trägerstruktur 16 dargestellt. Die Aussparungen 54 sind wiederum mittels der einzelnen Blechstapel 44 gebildet, wobei die einzelnen Abschnitte der Aussparungen 54 jedoch nicht miteinander fluchten. Folglich sind die beiden Aussparungen 54 stufenförmig ausgestaltet, wobei mit zunehmendem radialem Abstand zur Maschinenachse 2 der Abstand der radialen Aussparungen 54 zum Schlitz 50 zunimmt.

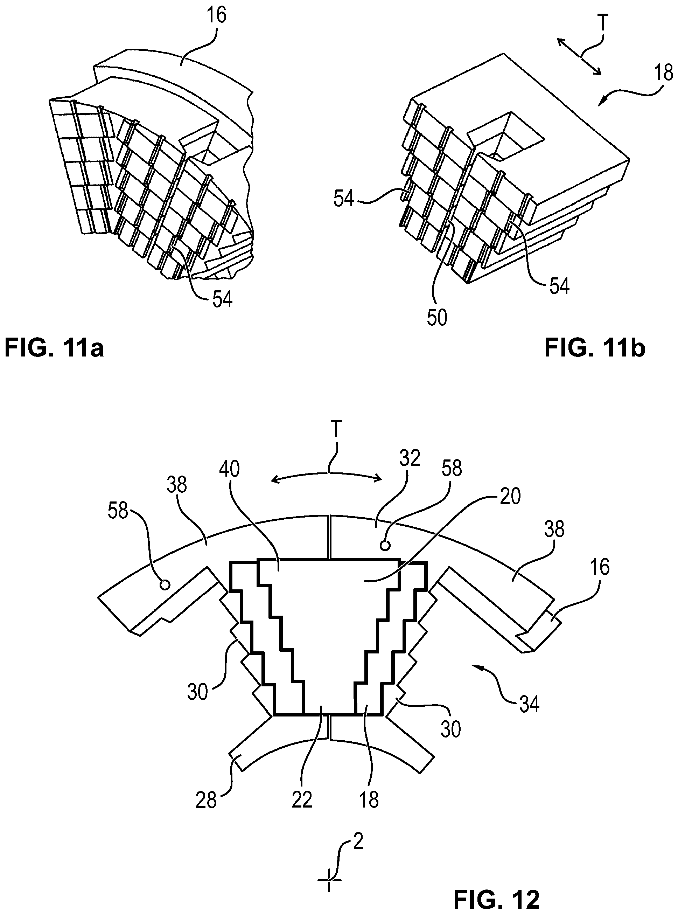

In Fig. 11 A und 11 B ist eine weitere Ausgestaltungsform der Trägerstruktur 16 sowie der Einsätze 18 dargestellt, wobei jeder Einsatz 18 vier der radialen Aussparungen 54 aufweist, die jeweils stufenförmig ausgestaltet sind. Hierbei sind in tangentialer Richtung T bezüglich des Schlitzes 50 jeweils zwei der nutförmigen radialen Aussparungen 54 auf einer der Seiten des Schlitzes 50 angeordnet. Mit zunehmendem Abstand zur Maschinenachse 2 nimmt der Abstand der Aussparungen 54 zum radialen Schlitz 50 in tangentialer Richtung T zu.

In Fig. 12 ist in einer Draufsicht vonseiten der Kühlplatte 24 gesehen einer der Einsätze 18 dargestellt, der den Abschnitt 20 aufweist. Der Einsatz 18 ist zwischen zwei in tangentialer Richtung T benachbart zueinander angeordneten Segmente 38 der Trägerstruktur 16 angeordnet. Mit anderen Worten befindet sich der Einsatz 18 formschlüssig zwischen zwei der insgesamt neun Stege 30 der Trägerstruktur 16 sowie zwischen dem Innenring 28 und dem Außenring 32 in einer der Montageöffnungen 34. Der Einsatz 18 weist folglich in einem Querschnitt senkrecht zur Maschinenachse 2 eine tannenbaumförmige Form auf. Der Einsatz 18 weist der durch die Trägerstruktur 16 ragenden Abschnitt 20 auf, der in tangentialer Richtung T verjüngt ausgestaltet ist. Infolgedessen weist das Blechpaket 40 die Stirnseite 22 auf, die im Vergleich zur Montageöffnung 34 eine verringerte Fläche aufweist. Die Begrenzung des Abschnitts 20 in tangentialer Richtung T ist wiederum mittels einer Stufen- bzw. Treppenform erstellt. Der Abschnitt 20 ist einstückig mit den jeweiligen, die weiteren Bereiche des Blechpaket w40 bildenden Bleche 42 ausgebildet.

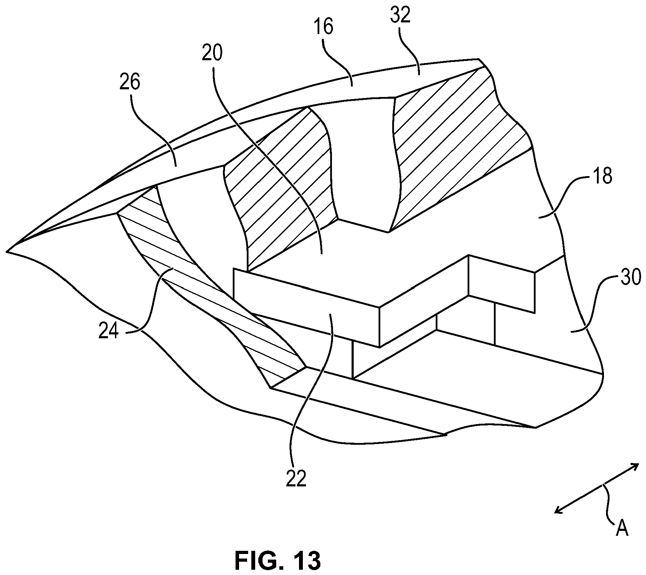

In Fig. 13 ist in einer Aufrissdarstellung der montierte Einsatz 18 dargestellt, der in axialer Richtung A durch die Trägerstruktur 16 hindurch ragt. Die Stirnseite 22 liegt an der Kühlplatte 24 an und ist in thermischem Kontakt mit dieser. Infolgedessen wird eine Erwärmung des Blechpakets 40, die aufgrund einer Bestromung der elektrischen Wicklung 51 erfolgt, mittels der Kühlplatte 24 abgeleitet, weswegen der Einsatz 18 beim Betrieb eine im Wesentlichen konstante Temperatur aufweist. Hierfür weist die Kühlplatte 24 nicht dargestellte Kühlrippen oder Leitungen für eine Kühlflüssigkeit auf. Der Bereich zwischen der Trägerstruktur 16 und der Kühlplatte 24 ist mittels des Flansches 26 ausgefüllt, der einstückig mit weiteren Bestandteilen des Gehäuses 6 ist. An dem Flansch 26 sowie weiteren, nicht gezeigten Bestandteilen des Gehäuses 6 sind die Trägerstruktur 16 und die Kühlplatte 24 befestigt. Hierfür greift der Flansch 26 in in axialer Richtung A verlaufende Bohrungen 58 ein, die in den Außenring 32 eingebracht sind, und die in Fig. 12 dargestellt sind. Der Flansch 26 liegt formschlüssig an dem Abschnitt 20 des Einsatzes 18 an. Aufgrund der verringerten Ausdehnung in tangentialer Richtung T des Einsatzes 18 im Bereich des Abschnitts 20 ist der Flansch 26 in diesem Bereich im Vergleich zu den in radialer Richtung R verlaufenden Stegen 30 der Trägerstruktur 16 verdickt ausgestaltet, weswegen dieser eine vergleichsweise hohe strukturelle Integrität aufweist. Infolgedessen wird die Trägerstruktur 16 mittels des Flansches 26 stabilisiert und eine Verbringung der einzelnen Segmente 38 der Trägerstruktur 16 ist verhindert.

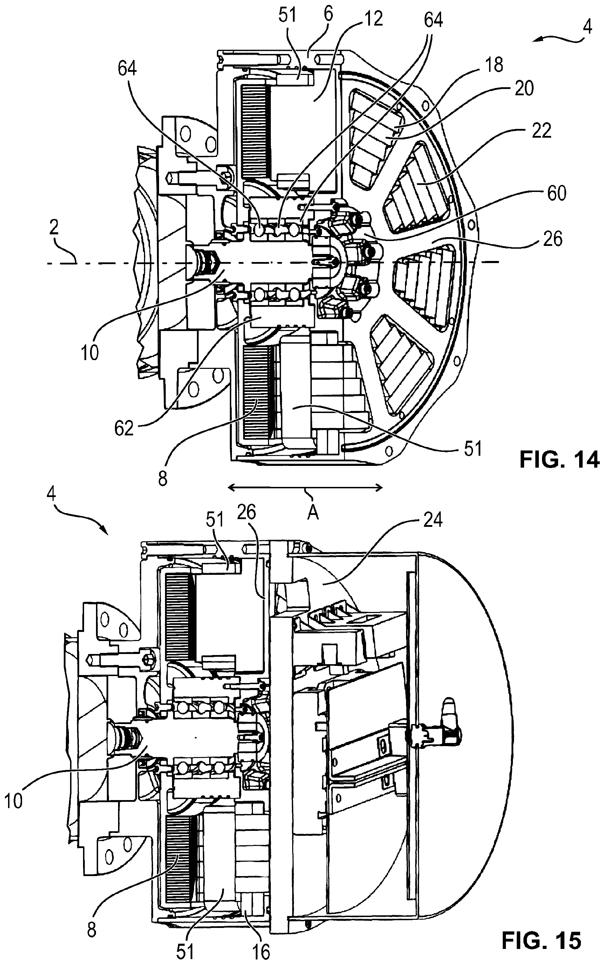

In Fig. 14 ist der Axialflussmotor 4 in einer Schnittdarstellung ohne Kühlplatte 24 und in Fig. 15 mit befestigter Kühlplatte 24 dargestellt. Der Flansch 26 ist sternförmig ausgestaltet und einstückig mit weiteren Bestandteilen des topfförmigen Gehäuses 6. Im Montagezustand ist der Flansch 26, wie in Fig. 15 gezeigt, im Wesentlichen vollständig mittels der Kühlplatte 24 abgedeckt, die an dem Gehäuse 6 in axialer Richtung A angebunden ist. Der Flansch 26 weist zentral eine topfförmige Vertiefung 60 auf, an der eine sich parallel zur Drehachse 2 erstreckende Befestigungsstruktur 62 in Form eines Hohlzylinders angebunden ist, der von der Kühlplatte 24 weggerichtet ist. Die Befestigungsstruktur 62 umgibt in radialer Richtung R drei Schrägkugellager 64. Diese weisen einen Druckwinkel bezüglich der Drehachse 2 auf, der stets in die gleiche Richtung geneigt ist. Vorzugsweise sind hierbei die Drehachsen sämtlicher Kugeln der Schrägkugellager 64 drehsymmetrisch bezüglich der Drehachse 2. Folglich wird mittels der Schrägkugellager 64 keine Vorspannung in axialer Richtung A realisiert.

Aufgrund der magnetischen Wechselwirkung des Stators 12 mit dem Rotor 8, die zumindest teilweise eine Kraftkomponente in axialer Richtung A aufweist, wird die Vorspannung in axialer Richtung A realisiert, weswegen einerseits der Rotor 8 bezüglich des Stators 12 stabilisiert ist. Andererseits ist aufgrund des Fehlens eines Schrägkugellagers, welches einen in die entgegengesetzte Richtung geneigten Druckwinkel zur Erzeugung der axialen Vorspannkraft aufweisen würde, ein Gewicht sowie ein Bauraum in axialer Richtung A reduziert. Ferner sind die Herstellungskosten verringert. Die Verwendung von Schrägkugellagern 64 bei einem Axialflussmotor 4, die einen Druckwinkel bezüglich der Drehachse 2 aufweisen, der stets in die gleiche Richtung geneigt ist, also mittels derer rein mechanisch keine Vorspannung in axialer Richtung A erstellt wird, ist unabhängig von der weiteren, konkreten Ausgestaltungsform des Stators 12, insbesondere der Einsätze 18 und/oder der Trägerstruktur 16, die hierbei fehlen können. Diese Verwendung und ein derartiger Axialflussmotor 4 werden derzeit vielmehr als eigenständige Erfindung betrachtet.

Der Rotor 8 weist ebenfalls ein Blechpaket auf, an dem nicht dargestellte Permanentmagneten befestigt sind. Diese sind im Wesentlichen segmentförmig ausgestaltet und wirken mit den trapezförmigen elektrischen Wicklungen 51 zusammen, von denen jeweils zwei in den Figuren gezeigt sind, wobei die obere in einer Schnittdarstellung und die untere in einer Seitenansicht dargestellt ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Maschinenachse
- 4: elektrische Maschine
- 6: Gehäuse
- 8: Rotor
- 10: Welle
- 12: Stator
- 14: Öffnung
- 16: Trägerstruktur
- 18: Einsatz
- 20: Abschnitt
- 22: Stirnseite
- 24: Kühlplatte
- 26: Flansch
- 28: Innenring
- 30: Steg
- 32: Außenring
- 34: Montageöffnung
- 36: Abdeckung
- 38: Segment
- 40: Blechpaket
- 42: Blech
- 44: Blechstapel
- 46: Hintergriff
- 48: Statornut
- 50: Schlitz
- 51: elektrische Wicklung
- 52: Polschuh
- 54: Aussparung
- 56: Kerbe
- 58: Bohrung
- 60: Vertiefung
- 62: Befestigungsstruktur
- 64: Schrägkugellager

- A: axiale Richtung
- R: radiale Richtung
- T: tangentiale Richtung

## Patentansprüche

1. Elektrische Maschine (4), insbesondere Axialflussmotor, mit einem um eine Maschinenachse (2) drehbar gelagerten Rotor (8), und mit einem Stator (12), der eine gesinterte, aus einem weichmagnetischen Material erstellte Trägerstruktur (16) und einen daran angebundenen Einsatz (18) aufweist, der zumindest teilweise einen Polschuh (52) bildet, und der ein Blechpaket (40) ist,
- wobei das Blechpaket (40) eine Anzahl an Blechstapeln (44) aufweist, deren jeweilige Bleche (42) die gleiche Form aufweisen, und die in radialer Richtung (R) aufeinandergestapelt sind, wobei sich die Bleche (42) unterschiedlicher Blechstapel (44) unterscheiden, indem die Fläche der Bleche (42) mit zunehmendem Abstand zur Maschinenachse (2) vergrößert ist,
- wobei das Blechpaket (40) achsensymmetrisch bezüglich einer radialen Geraden ist, und
- wobei eine in radialer Richtung (R) verlaufende Kante des Blechpakets (40) stufenförmig ausgestaltet ist.

2. Elektrische Maschine (4) nach Anspruch 1,
**dadurch gekennzeichnet,**
**dass** die Bleche (42) U-förmig sind.

3. Elektrische Maschine (4) nach einem der Ansprüche 1 bis 2,
**dadurch gekennzeichnet,**
**dass** der Einsatz (18) eine radial verlaufende Statornut (48) aufweist.

4. Elektrische Maschine (4) nach einem der Ansprüche 1 bis 3,
**dadurch gekennzeichnet,**
**dass** der Einsatz (18) eine radial verlaufende Aussparung (54) aufweist, und/oder dass der Einsatz (18) und die Trägerstruktur (16) miteinander verzahnt sind.

5. Elektrische Maschine (4) nach einem der Ansprüche 1 bis 4,
**dadurch gekennzeichnet,**
**dass** der Einsatz (18) in axialer Richtung (A) durch die Trägerstruktur (16) ragt.

6. Elektrische Maschine (4) nach Anspruch 5,
**dadurch gekennzeichnet,**
**dass** der Einsatz (18) stirnseitig an einer Kühlplatte (24) anliegt, und/oder dass der durch die Trägerstruktur (16) ragende Abschnitt (20) des Einsatzes (18) in tangentialer Richtung (T) verjüngt ist.

7. Elektrische Maschine (4) nach einem der Ansprüche 1 bis 6,
**dadurch gekennzeichnet,**
**dass** die Trägerstruktur (16) eine Anzahl separater Segmente (38) aufweist, die in tangentialer Richtung (T) angeordnet sind, und/oder dass die Trägerstruktur (16) stirnseitig an einem Flansch (26) angebunden ist.

8. Elektrische Maschine (4) nach einem der Ansprüche 1 bis 7,
**dadurch gekennzeichnet,**
**dass** die Trägerstruktur (16) einen Innenring (28) und einen Außenring (32) aufweist, die mittels Stege (30) verbunden sind, wobei der Einsatz (18) in radialer Richtung (R) zumindest teilweise zwischen dem Innenring (28) und dem Außenring (32) angeordnet ist.

9. Elektrische Maschine (4) nach Anspruch 8,
**dadurch gekennzeichnet,**
**dass** der Einsatz (18) zumindest abschnittsweise an dem Innenring (28) und dem Außenring (32) anliegt, und/oder dass der Außenring (32) einen den Einsatz (18) in radialer Richtung (R) überdeckende mantelsegmentförmige Abdeckung (36) aufweist.

10. Elektrische Maschine (4) nach einem der Ansprüche 1 bis 9,
**gekennzeichnet durch**
eine Anzahl gleichartiger Einsätze (18) und eine hierzu korrespondierende Anzahl an Polschuhen (52), und/oder durch einen einzigen Rotor (8).

11. Stator (12) einer elektrischen Maschine (4) nach einem der Ansprüche 1 bis 10.

## Claims

1. Electrical machine (4), in particular axial flux motor, having a rotor (8) mounted so as to be rotatable about a machine axis (2), and having a stator (12) that has a sintered support structure (16), produced from a soft magnetic material, and an insert (18) connected thereto, at least part of which forms a pole shoe (52), and which is a laminated core (40),
- wherein the laminated core (40) has a number of sheet stacks (44), the respective sheets (42) of which have the same shape, and which are stacked on top of one another in the radial direction (R), wherein the sheets (42) of different sheet stacks (44) differ by virtue of the surface area of the sheets (42) being enlarged as the distance from the machine axis (2) increases,
- wherein the laminated core (40) is axially symmetrical in relation to a radial straight line, and
- wherein an edge of the laminated core (40) that runs in the radial direction (R) is in stepped form.

2. Electrical machine (4) according to Claim 1,
**characterized**
**in that** the sheets (42) are U-shaped.

3. Electrical machine (4) according to either of Claims 1 and 2,
**characterized**
**in that** the insert (18) has a radially running stator groove (48).

4. Electrical machine (4) according to one of Claims 1 to 3,
**characterized**
**in that** the insert (18) has a radially running cutout (54),
and/or in that the insert (18) and the support structure (16) engage with one another.

5. Electrical machine (4) according to one of Claims 1 to 4,
**characterized**
**in that** the insert (18) projects through the support structure (16) in the axial direction (A).

6. Electrical machine (4) according to Claim 5,
**characterized**
**in that** the insert (18) has its end abutting a cooling plate (24), and/or in that the section (20) of the insert (18) that projects through the support structure (16) is tapered in the tangential direction (T).

7. Electrical machine (4) according to one of Claims 1 to 6,
**characterized**
**in that** the support structure (16) has a number of separate segments (38) arranged in the tangential direction (T), and/or in that the support structure (16) has its end connected to a flange (26) .

8. Electrical machine (4) according to one of Claims 1 to 7,
**characterized**
**in that** the support structure (16) has an inner ring (28) and an outer ring (32) that are connected by means of webs (30), wherein at least part of the insert (18) is arranged between the inner ring (28) and the outer ring (32) in the radial direction (R).

9. Electrical machine (4) according to Claim 8,
**characterized**
**in that** at least sections of the insert (18) abut the inner ring (28) and the outer ring (32), and/or in that the outer ring (32) has a jacket-segment-shaped cover (36) covering the insert (18) in the radial direction (R).

10. Electrical machine (4) according to one of Claims 1 to 9,
**characterized by**
a number of inserts (18) of the same type and a corresponding number of pole shoes (52), and/or by a single rotor (8).

11. Stator (12) of an electrical machine (4) according to one of Claims 1 to 10.

## Revendications

1. Machine électrique (4), notamment moteur à flux axial, présentant
un rotor (8) monté à rotation autour d'un axe (2) de machine et
un stator (12) qui présente une structure portante (16) en un matériau magnétique doux fritté et à laquelle est reliée une garniture (18) qui forme au moins une partie d'un sabot polaire (52) et qui est formée d'un paquet (40) de tôles,
- le paquet (40) de tôles présentant plusieurs empilements (44) de tôles (42) qui présentent toutes la même forme et empilées les unes sur les autres dans la direction radiale (R), les tôles (42) des différents empilements (44) de tôles différant par le fait que la surface des tôles (42) augmente en même temps que leur distance par rapport à l'axe (2) de la machine,
- le paquet (40) de tôles étant symétrique axialement par rapport à une droite radiale et
- un chant du paquet (40) de tôles s'étendant dans la direction radiale (R) en forme de gradin.

2. Machine électrique (4) selon la revendication 1, **caractérisée en ce que** les tôles (42) ont la forme d'un U.

3. Machine électrique (4) selon l'une des revendications 1 et 2, **caractérisée en ce que** la garniture (18) présente une rainure (48) de stator s'étendant radialement.

4. Machine électrique (4) selon l'une des revendications 1 à 3, **caractérisée en ce que** la garniture (18) présente une découpe (54) s'étendant radialement et/ou **en ce que** la garniture (18) et la structure portante (16) s'engrènent l'une dans l'autre.

5. Machine électrique (4) selon l'une des revendications 1 à 4, **caractérisée en ce que** la garniture (18) traverse la structure portante (16) dans la direction axiale (A).

6. Machine électrique (4) selon la revendication 5, **caractérisée en ce que** la garniture (18) repose du côté frontal sur une plaque de refroidissement (24) et/ou **en ce que** la partie (20) de la garniture (18) qui traverse la structure portante (16) se rétrécit dans la direction tangentielle (T).

7. Machine électrique (4) selon l'une des revendications 1 à 6, **caractérisée en ce que** la structure portante (16) présente plusieurs segments (38) disposés dans la direction tangentielle (T) et/ou **en ce que** la structure portante (16) est reliée sur son côté frontal à une bride (26).

8. Machine électrique (4) selon l'une des revendications 1 à 7, **caractérisée en ce que** la structure portante (16) présente une bague intérieure (28) et une bague extérieure (32) reliées par des traverses (30), au moins une partie de la garniture (18) étant disposée entre la bague intérieure (28) et la bague extérieure (32) dans la direction radiale (R).

9. Machine électrique (4) selon la revendication 8, **caractérisée en ce que** au moins certaines parties de la garniture (18) reposent contre la bague intérieure (28) et la bague extérieure (32) et/ou **en ce que** la bague extérieure (32) présente un recouvrement (36) en forme de segments d'enveloppe qui recouvre la garniture (18) dans la direction radiale (R).

10. Machine électrique (4) selon l'une des revendications 1 à 9, **caractérisée par** plusieurs garnitures (18) identiques et un nombre identique de sabots polaires (52) et/ou par un seul rotor (8).

11. Stator (12) de machine électrique (4) selon l'une des revendications 1 à 10.
